# EUROPEAN PATENT APPLICATION

(11) **EP 1 380 540 A1**
(43) Date of publication of application: **14.01.2004**
(21) Application number: 02014884.7
(22) Date of filing: 04.07.2002
(51) Int. Cl.: C01F 7/02, C08K 3/22, C09K 21/02, C09C 1/40

(54) **Fine aluminium hydroxide**

(71) Applicant: ALBEMARLE CORPORATION, Baton Rouge, LA 70801-1765 (US)
(72) Inventor: Brown, Neil, 50126 Bergheim (DE)
(74) Representative: UEXKÜLL & STOLBERG

(57) **Abstract**

The invention relates to an aluminium hydroxide having an average particle size in the range of 2 to 4 µm and a specific surface area according to BET in the range of 8 to 12 m²/g which is obtained by ball-milling.

## Description

In general, the market for fire retarded plastics increasingly requires aluminium trihydroxide (ATH) grades with improved rheology to allow higher filling levels but at the same time with finer particle size to raise fire properties effectiveness as well as to reduce sedimentation during processing and to give better physical and surface properties of the end composite materials.

Although the finer the ATH the better, this generally militates against the desired low viscosity behaviour of the inorganic material when mixed with a synthetic organic resin. In other words, the finer the ATH, the higher is the viscosity in synthetic resins so that inevitably compromises have to be made to achieve an acceptable overall end result.

One approach is to mix grades of ATH of different particle sizes (e.g. coarse and fine) in order to increase packing density and to broaden the particle size distribution which leads to a reduction in viscosity.

The basic ATH materials available for the plastics and related industries are
(a) coarse particles of an average size up to 80 - 120 µm produced by the Bayer Process for the production of alumina from bauxite,
(b) less coarse particles of an average particle size 40 - 80 µm generally produced by specialty alumina companies and
(c) very fine crystals/particles of an average size up to ca. 2 µm produced from side stream processes at the specialty alumina plants.

The thermosetting plastics industry requires that particle size distributions of ATH may have an average particle size of up to ca. 40 µm depending on the application although in general the tendency increasingly is to push to the finer end of the particle size range to take benefit of the technical advantages already mentioned.

Size reduction by milling is widely practised in order to bring the particle sizes down to sizes compatible with the various composite production processes.

In practice, the prior art demonstrates that it is possible to produce satisfactorily ATH with an average particle size down to ca. 4 µm by direct size reduction of coarse particles by grinding. On the other hand, average particle sizes of up to ca. 2 µm can be created by size enlargement of the fine crystals during the side-stream crystallization processes. Above this average particle size, the viscosity of the aggregated/agglomerated particles increases very rapidly to an unworkable level.

This leaves a gap between 2 - 4 µm which the industry has not been able to satisfactorily cover by other means than by mixing particle size distributions which are both coarser and finer than the 2-4 µm average size required. While mixing grades of different sizes leads to products of average size within the 2 - 4 µm size range to lower viscosity behaviour in synthetic resins, the disadvantages here are the extra costs involved plus a broadened particle size distribu-tion and an increase in "top cut" which has a bearing on efficiency of some production processes (such as pultrusion, resin transfer moulding and filament winding) and physical properties such as surface finish of the end composite material.

Size reduction processes based on different types of milling, i.e., ball-milling, impact milling, vibration milling etc., are widely used to reduce particle sizes of ATH down into the desired range. The effectiveness of milling and the ultimate particle size achievable in a cost effective manner is a function of the milling technique used and the grindability of the ATH which in turn is a function of size and structure of the starting ATH.

Size reduction by grinding generally occurs with relative ease down to average sizes of below ca. 20 µm and is not dependent on the technique used. Generally, however, the finest particles can be obtained by ball milling, and as the particles are ground further at ca. 4 µm a point is reached where not only do viscosities begin to rise exponentially, but also physical and chemical properties of the ATH deteriorate rapidly as the size reduction mechanism by gross fracture is superseded by that of attrition of the particles as the primary mechanism.

Considering the above, the object of the invention is to provide an aluminium hydroxide which has a small particle size and still has the desired properties of low top cut and low viscosity of such particles in synthetic resins, and to provide a method for producing said aluminium hydroxide.

The object is solved by providing an alummium hydroxide (ATH) having an average particle size within the range of 2 to 4 µm, preferably 2.5 to 3.5 µm and a specific surface area according to BET within the range of 8 to 12 m²/g, preferably 9 to 11 m²/g.

This new aluminium hydroxide can be produced directly by ball milling of an aluminium hydroxide (starting material) having an average particle size of 40 to 80 µm, preferably 50 to 70 µm and a specific surface area according to BET of 0.8 m²/g or less, pre-ferably 0.7 m²/g or less, by way of using grinding balls having a size in the range of 20 to 40 mm. Preferably the ball size range is 25 to 35 mm. The average diameter of the balls is preferably up to 30 mm, e.g. 30 mm.

Preferred embodiments are subject of the dependent claims.

The aluminium hydroxide according to the present invention is particularly suitable for use as filier and fire retardant in synthetic resins and plastic composite materials.

Key features of the invention are
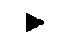 the particle size of the starting ATH material for milling (average size 40 - 80 µm) and
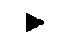 the sizing of the grinding balls used in the size reduction process (20 to 40 mm; the average diameter being preferably up to 30 mm).

Milling takes preferably place in a closed circuit and continues until the desired end-product particle size is achieved. The retention time involved can be expressed by way of throughput (tonnes/h) which in turn is e.g. about 0.1 to 3 tonnes per hour.

When the products of the present invention are mixed in standard amounts (175 phr) in synthetic resin, the resulting viscosities are more than 50% lower than would normally be achieved by ball milled ATH of the same particle size and milled under standard conditions.
The production method is cost effective and the invention is of industrial importance.

The present invention overcomes the problems of the prior art surprinsingly by a combination of practical conditions which make possible direct size reduction by ball milling of suitably sized coarse ATH particles down to the desired 2 - 4 µm average particle size range.

Preferably the aluminium hydroxide is of a gibbsite type.

Moreover, the result is surprisingly achieved without sacrifice of chemical and physical properties of the ATH produced. The products of the present invention exhibit both low top cut and greatly lowered viscosity of the particles in synthetic resin. (Top cut (TC) refers to the largest particle size in the particle size distribution.)

The present invention will now be illustrated in detail with reference to the following examples, which however are not to be interpreted as limiting the scope of the invention.

The grades of ATH used are all commercially available, the MARTINAL
type being a product of Martinswerk GmbH, Bergheim, Germany, a Company of the Albemarle Corporation of Richmond, USA. The unsaturated polyester Synolite 002-N2 synthetic resin used is a product of DSM Composite Resins.

All viscosity measurements were made at 23°C using a Brookfield HBT viscosimeter with spindle 3 rotating at 5 rpm. The filling level of ATH was 175 phr by weight (phr refers to parts per hundred resin).

All particle sizes were measured using the Cilas 850 laser scatte-ring measurement technique (available from Quantachrome GmbH, Eurasburg, Germany). The aqueous electrolyte was 0.5 wt.% sodium polyacrylate solution. Powder dispersion was achieved by prior application of ultrasound for 60 seconds. The milled materials were analysed using Range 1 of the apparatus, which covered the particle size range of 0.1 to 60 µm.

All surface area measurements were measured using the single point BET gas (nitrogen) adsorption method (DIN 66132).

The ball mill equipment used was industrial scale and as follows:
- Type:: The ball mills were 4 m in length and 2m in diameter and fitted with air classification for closed circuit operation.

Aluminium oxide grinding balls:
- Size:: (a) 40 mm average diameter (i.e., large') and
(b) 30 mm average diameter (i.e., 'small')

The ball charge was 12 tonnes with 3 - 4 tonnes of ATH being milled in continuous operation in closed circuit with the air classifier to control the particle size distribution of the resulting products discharged.

### Example 1

Two different types ATH of essentially the same particle structure but of different particle sizes were ball-milled down into particle size range 2 - 8 µm without the help of milling aids. The balls used were the large ones, i.e., up to 40 mm in average diameter. The results obtained were as follows:

**Table 1:**

| | Throughput | Particle Size | | Viscosity in Resin | |
|---|---|---|---|---|---|
| | (tonnes/h) | Ave. (µm) | TC (µm) | SSA (m²/g) | Pa.s |
| Martinal ON | 2.2 | 6.2 | 28 | 2.8 | 67.0 |
| (53 µm) | 1.5 | 4.8 | 24 | 4.8 | 71.0 |
| | 1.0 | 3.3 | 20 | 6.1 | 122 |
| | 0.35 | 2.5 | 11 | 12.1 | 147 |
| Industry ATH | 2.2 | 6.0 | 28 | 3.2 | 98.0 |
| (98 µm) | 1.45 | 4.4 | 22 | 3.8 | 129 |
| | 0.75 | 3.0 | 20 | 6.1 | 144 |
| | 0.45 | 2.4 | 10 | 11.2 | 285 |
| Specific surface area: | | Martinal ON: 0.3 m²/g; | | | |
| | | Industry ATH: 0.1 m²/g | | | |
| Average particle size: | | Martinal ON: 53 µm; | | | |
| | | Industry ATH: 98 µm | | | |
| TC = top cut SSA = specific surface area | | | | | |

The results confirm that the finer the ATH the higher is the viscosity in synthetic resin.

The first significant difference in the data is that size reduction of the Martinal ON leads to lower viscosities in synthetic resin than size reduction of the larger Industry ATH particles.

A general rule of thumb of the industry classifies ATH as of 'low viscosity' if the viscosity in resin is < 100 Pa.s under standard measuring conditions.

On this basis, only the coarser milled products from Martinal ON meet this criterion (the products with average sizes > 4 µm). Size reduction below 4 µm results in a significant increase in viscosity.

### Example 2

The tests of Example 1 were essentially repeated using the small grinding balls, i.e., 30 mm average diameter. The results obtained were as follows:

**Table 2:**

| | Particle Size | | | Moisture | Viscosity in Resin |
|---|---|---|---|---|---|
| | Ave. (µm) | TC (µm) | SSA (m²/g) | Content (wt.%) | Pa.s |
| Martinal ON | 6.4 | 28 | 2.7 | 0.25 | 65 |
| (53 µm) | 4.2 | 24 | 3.6 | 0.35 | 73 |
| | 3.2 | 22 | 9.4 | 0.45 | 37 |
| | 2.3 | 12 | 10 | 0.51 | 44 |
| Industry ATH | 6.2 | 26 | 3.1 | 0.25 | 85 |
| (98 µm) | 5.3 | 24 | 4.6 | 0.35 | 96 |
| | 3.33 | 20 | 6.1 | 0.40 | 103 |

The throughputs per hour obtained with the smaller grinding balls were essentially within ca 10% of the values obtained with the larger balls.

Beyond this, there were no other significant differences in the measured data other than associated with the products obtained in the 2 - 4 µm range when grinding Martinal ON. Viscosities are dra-matically lower when using the smaller grinding balls, down by >50%.

Without being bound to any particular theory, it is suggested that the changes in the specific surface area perhaps provide the key to what is a surprisingly large improved packing density of the particles in the synthetic resin. Moreover, the specific surface increases without a concomitant increase in the measured water
adsorption values.

The magnitude of the reduction in viscosity observed in the products of the present invention can be appreciated by comparison with the low viscosity grade Martinal ON-904, (average size ca. 4 µm and top cut ca. 30 µm), an industrially important product of the market place. Under the same standard measuring conditions used in the present work, the viscosity of Martinal ON-904 is of the order of 70 Pa.s.

The products of the present invention can justifiably be labelled 'ultra low viscosity', while combining small average particle size with low 'top cut'.

The production method is cost effective and the invention is of industrial importance.

## Claims

1. Aluminium hydroxide **characterised by** an average particle size in the range of 2 to 4 µm and a specific surface area according to BET in the range of 8 to 12 m²/g.

2. Aluminium hydroxide according to claim 1, **characterised by** a particle size in the 10% range D(10%) of 0.5 to 1.0 µm and in the 90% range D(90%) of 5 to 15 µm.

3. Process for the preparation of aluminium hydroxide according to claim 1 or 2, **characterised in that** the starting material is an aluminium hydroxide of average particle size in the range of 40 - 80 µm and a specific surface area according to BET of 0.8 m²/g or less and the milling balls used have a size of 20 to 40 mm, preferably an average size of up to 30 mm.

4. Process for the preparation of aluminium hydroxide according to claim 1 or 2, **characterised in that** a ball mill operating in closed circuit with an air classifier is the basis of size reduction of the starting aluminium hydroxide material of claim 3.

5. Synthetic resin containing an aluminium hydroxide according to claims 1 or 2 or produced according to claims 3 or 4.

6. Use of aluminium hydroxide of claims 1 or 2 or produced according to claims 3 or 4 as a fire retardant additive in synthetic resins.
